# EUROPÄISCHE PATENTSCHRIFT

(11) **EP 0 954 435 B1**
(45) Veröffentlichungstag und Bekanntmachung des Hinweises auf die Patenterteilung: **10.10.2001**
(21) Anmeldenummer: 98962365.7
(22) Anmeldetag: 20.11.1998
(51) Int. Cl.: B29C 70/84, A47K 3/02, B29C 33/00

(54) **VERFAHREN ZUR HERSTELLUNG EINER VERBUNDWANNE**
METHOD FOR PRODUCING A COMPOSITE BATHTUB
PROCEDE DE PRODUCTION D'UNE BAIGNOIRE COMPOSITE

(30) Priorität: 21.11.1997 DE 19751759
(43) Veröffentlichungstag der Anmeldung: 10.11.1999
(73) Patentinhaber: Franz Kaldewei GmbH & Co.KG, 59229 Ahlen (DE)
(72) Erfinder: PIEPER, Fritz, D-27755 Delmenhorst (DE)
(74) Vertreter: Albrecht, Rainer Harald, Dr.-Ing.
(86) Internationale Anmeldenummer: EP9807450
(87) Internationale Veröffentlichungsnummer: WO9926776

(56) Entgegenhaltungen:
- DE-A- 4 338 963
- DE-C- 19 544 426
- GB-A- 904 763

## Beschreibung

Die vorliegende Erfindung betrifft ein Verfahren zur Herstellung einer Verbundwanne, die wenigstens eine Stahischale und wenigstens eine Acrylschale umfaßt, die miteinander fest verbunden werden, wobei man in einem ersten Schritt einen tiefgezogenen Acrylrohling über einen Kern stülpt.

Aus der DE 195 44 426 C 1 ist beispielsweise ein Verfahren zur Herstellung von Verbundwannen der vorgenannten Art bekannt. Bei diesem bekannten Verfahren wird eine Innenschale aus Acryl (Acrylrohling) mit einer Außenschale aus Stahl verbunden, wobei in den Zwischenraum zwischen beiden Schalen ein Zweikomponenten-Kunststoff als Füllstoff injiziert wird, so daß nach dessen Aushärten eine dreischichtige Wanne entsteht mit einer Außenschicht aus Stahl, die die Wanne stabilisiert, einer Innenschicht aus Acryl, die die Nutzschicht der fertigen Wanne darstellt und einer aus dem Zweikomponenten-Flüssigkunststoff entstandenen Zwischenschicht, die einen guten Verbund zwischen den beiden anderen Schichten herstellt.

Bei diesem bekannten Verfahren besteht ein Nachteil darin, daß die Stahlaußenhaut jeweils weitgehend mit der Acrylschale formidentisch sein muß. Dadurch ist man entweder auf eine begrenzte Zahl von Verbundwannen mit unterschiedlichem Design festgelegt, oder aber man muß eine große Anzahl verschieden geformter Stahlrohlinge bevorraten. Naturgemäß ist dies mit höheren Kosten beim Hersteller verbunden, da die einzelnen Stahlrohlinge ebenfalls zunächst hergestellt werden müssen, was im allgemeinen aus Stahlblech ebenfalls im Tiefziehverfahren geschieht.

Die Aufgabe der vorliegenden Erfindung ist es somit, ein Verfahren zur Herstellung von Verbundwannen der eingangs genannten Art zu schaffen, das auch Abweichungen in der Form zwischen dem äußeren Stahlrohling und der inneren Acrylschale zuläßt.

Eine Lösung dieser Aufgabe liefert ein erfindungsgemäßes Verfahren zur Herstellung von Verbundwannen der eingangs genannten Gattung mit den kennzeichnenden Merkmalen des Hauptanspruchs. Bei dem erfindungsgemäßen Verfahren geht man so vor, daß man zunächst wiederum im ersten Schritt den tiefgezogenen Acrylrohling über den Kern stülpt. Anschließend wird aber über diesen Acrylrohling zunächst eine Formaußenschale mit einem gewissen Abstand plaziert. Formaußenschale und Acrylrohling werden gegeneinander abgedichtet und in den Zwischenraum zwischen Formaußenschale und Acrylrohling wird ein geeignetes Reaktionsharz injiziert. Nach der Aushärtung des Reaktionsharzes kann man dann die Formaußenschale entnehmen. Man hat dann ein Zwischenprodukt, das einerseits die Innenform des Acrylrohlings hat, von dem man ausgegangen ist und andererseits aber eine äußere Schicht aus einem Coating aufweist, das aus dem Reaktionsharz gebildet wird und das die Acrylschicht stabilisiert. Man kann anschließend einen Stahlrohling auflegen, der in seiner Form von derjenigen des Ausgangs-Acrylrohlings abweicht. Stahlrohling und Acrylrohling (Zwischenprodukt) werden dann wiederum gegeneinander abgedichtet. Zwischen dem Stahlrohling und dem Zwischenprodukt (Acrylrohling mit Coating) läßt man einen Zwischenraum, in den man dann einen Polymerschaum injiziert. Nach der Vernetzung des Polymerschaums erhält man dann eine Verbundwanne, die entformt werden kann. Diese Verbundwanne ist ein Produkt, das in dem Acrylteil, der im Gebrauch der Wanne die Innenhaut bildet, eine abweichende Form haben kann zu der Stahlhaut, die im Gebrauch der Wanne die Außenhaut bildet und als stabilisierender Träger dient.

Bei der Abweichung in der jeweiligen Form kommt es natürlich auf den Abstand zwischen Acrylrohling und Stahlrohling an. Dieser Abstand ist bedingt durch die jeweilige Verfahrenstechnik variierend und kann beispielsweise bis zu etwa 50 mm oder darüber hinaus betragen. In der Regel kann der Designer bei der Formung der Acrylschale, die das gewünschte Design des Endprodukts bestimmt, den Abstand zwischen den beiden Schalen zu einem hohen Prozentsatz ausnutzen, beispielsweise bis zu etwa 80%. Ein wesentlicher Vorteil des erfindungsgemäßen Verfahrens besteht somit darin, daß man den gleichen Stahlrohling für mehrere Acrylrohlinge mit innerhalb gewisser Grenzen abweichendem Design verwenden kann.

Die Unteransprüche 2 bis 6 betreffen bevorzugte Weiterbildungen des vorgenannten erfindungsgemäßen Verfahrens.

Als das genannte Reaktionsharz verwendet man vorzugsweise einen Kunststoff auf Basis von Methylmethacrylat oder Polyurethan oder Epoxid oder Polyester. Für den Polymerschaum verwendet man vorzugsweise ein Polyurethanschaumsystem.

Die Abfluß- oder Überlaufbohrung der Wanne beziehungsweise der Wannenrohlinge kann man benutzen, um den Polymerschaum beziehungsweise das Reaktionsharz in den jeweiligen Zwischenraum zu injizieren. Nach der Entformung bringt man vorzugsweise an der fertigen Wanne die Ab- und/oder Überlaufbohrungen an.

Die Erfindung betrifft weiterhin gemäß einer Variante ein Verfahren zur Herstellung einer Verbundwanne, die wenigstens einen Träger und wenigstens eine Acrylschale umfaßt, die miteinander fest verbunden werden, wobei man in einem ersten Schritt einen tiefgezogenen Acrylrohling über einen Kern stülpt und auch die nächsten Schritte zunächst in gleicher Weise durchführt wie in bei dem eingangs genannten Verfahren. Es wird also anschließend eine Formaußenschale mit Abstand über dem Acrylrohling plaziert. Dann werden Formaußenschale und Acrylrohling gegeneinander abgedichtet und in den Zwischenraum zwischen Formaußenschale und Acrylrohling wird ein geeignetes Reaktionsharz injiziert. Dann entnimmt man nach Aushärtung des Reaktionsharzes die Formaußenschale und hat dann einen Acrylrohling, der außenseitig (unterseitig) mit einem Coating versehen ist.

In Abänderung zu dem eingangs genannten Verfahren wird dann aber anstelle des Stahlrohlings nach Abnahme der ersten Formaußenschale eine neue Formaußenschale mit den Außenmaßen eines zur Wanne gehörenden Wannenträgers aufgesetzt. Dieses Verfahren hat den Vorteil, daß es ermöglicht, eine Wanne (vorzugsweise Badewanne oder Duschwanne) herzustellen, die unmittelbar nach der Herstellung einen integrierten Wannenträger unterhalb des eigentlichen Wannenkörpers aufweist, der mit diesem verbunden ist.

Vorzugsweise dichtet man zunächst nach dem Aufsetzen zu der neu aufgesetzten Formaußenschale hin ab. Weiterhin injiziert man dann vorzugsweise in den Zwischenraum zwischen dieser Wanne und der neuen Formaußenschale einen Polymerschaum und entnimmt nach dessen Vernetzung eine fertige Wanne mit integriertem Wannenträger.

An der fertigen Wanne nimmt man dann wiederum vorzugsweise die Ab- beziehungsweise Überlaufbohrungen vor.

Es hat sich gezeigt, daß man im Rahmen der vorliegenden Erfindung als Polymerschaum vorzugsweise einen solchen verwendet, der ein Raumgewicht aufweist, das innerhalb eines Bereichs von etwa 40 kg bis 60 kg liegt, vorzugsweise im Bereich von etwa 50 kg. Weiter vorzugsweise verwendet man als Polymerschaum dabei einen Polyurethanschaum.

Ein Verfahren zur Herstellung einer solchen Verbundwanne mit integriertem Wannenträger wird in Anspruch 7 beschrieben. Die Unteransprüche 8 bis 12 betreffen bevorzugte Weiterbildungen dieses Verfahrens. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Explosionsdarstellung anhand derer eine Variante des erfindungsgemäßen Verfahrens erläutert wird;
- Fig. 2: eine Schnittansicht einer fertigen Wanne die gemäß dem Verfahren nach einer Variante der Erfindung hergestellt wurde;
- Fig. 3: eine vergrößerte Detailansicht eines Ausschnitts III von Fig. 2;
- Fig. 4: eine Explosionsdarstellung anhand derer ein erfindungsgemäßes Verfahren gemäß einer weiteren Variante erläutert wird;
- Fig. 5: eine Schnittansicht einer fertigen Wanne die nach einem Verfahren gemäß einer weiteren Variante der Erfindung hergestellt wurde;
- Fig. 6: eine vergrößerte Detailansicht eines Ausschnitts VI von Fig. 5.

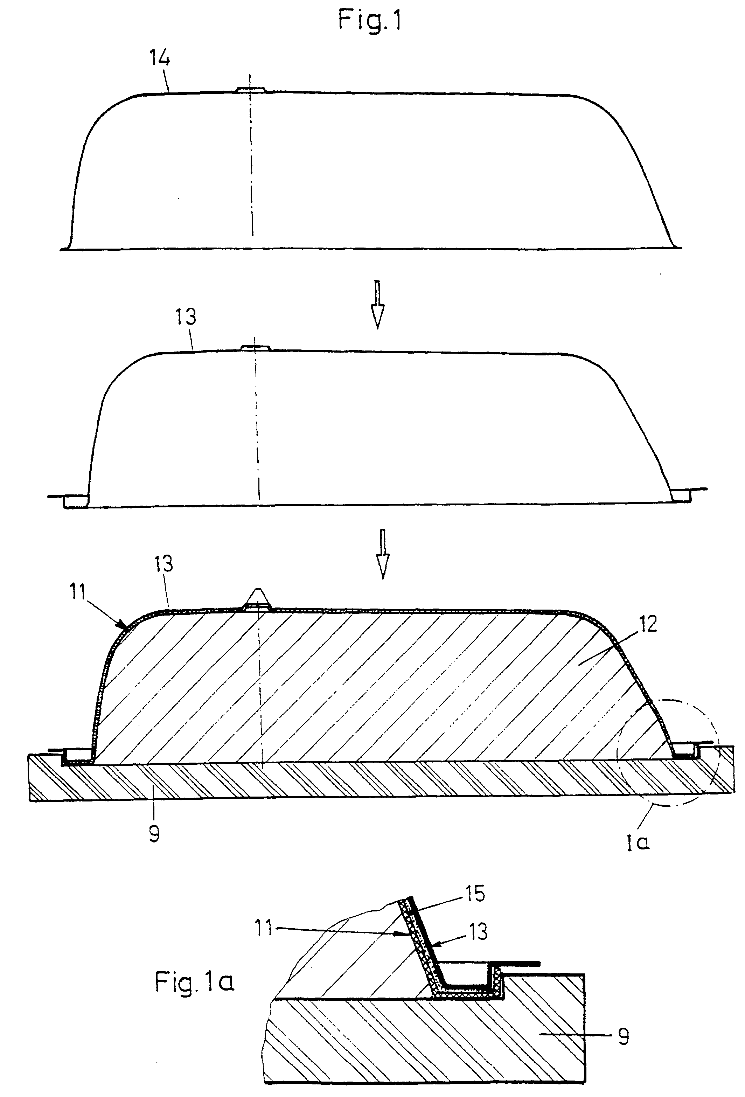

Zunächst wird auf die Fig. 1 bis 3 Bezug genommen. Fig. 1 zeigt eine schematisch vereinfachte Explosionsdarstellung anhand derer eine Variante des erfindungsgemäßen Verfahrens erläutert wird. In der Zeichnung ist unten ein Acrylrohling 11 für zum Beispiel eine Badewanne dargestellt, der über einen Kern 12 gestülpt ist. Der Acrylrohling 11 liegt dabei so auf dem Kern 12, daß die Unterseite der späteren Wanne nach oben liegt. Acrylrohling 11 und Kern 12 ruhen auf einer Grundplatte 9. In der Zeichnung in der Mitte ist nun die Formaußenschale 13 dargestellt, die über den auf dem Kern 12 befindlichen Acrylrohling 11 gestülpt wird und zwar mit einem relativ geringen Abstand, beispielsweise von wenigen Millimetern, so daß sich ein Zwischenraum ergibt. Danach werden diese Formaußenschale 13 und der Acrylrohling 11 gegeneinander abgedichtet und in den Zwischenraum zwischen Formaußenschale 13 und Acrylrohling 11 wird ein Reaktionsharz beispielsweise Polyurethan injiziert. Nach Aushärtung dieses Reaktionsharzes wird die Formaußenschale 13 wieder abgenommen und es ist dann ein Acrylrohling mit einer Schicht aus einem unterseitigen Coating aus dem Reaktionsharz entstanden, wobei das Coating eine Schichtstärke entsprechend dem Abstand der Formaußenschale 13 vom Acrylrohling 11 hat. Diese Zwischenstufe des Acrylrohlings 11 mit dem Coating, das aus dem Reaktionsharz 15 entstanden ist, ist in Fig. 1a dargestellt.

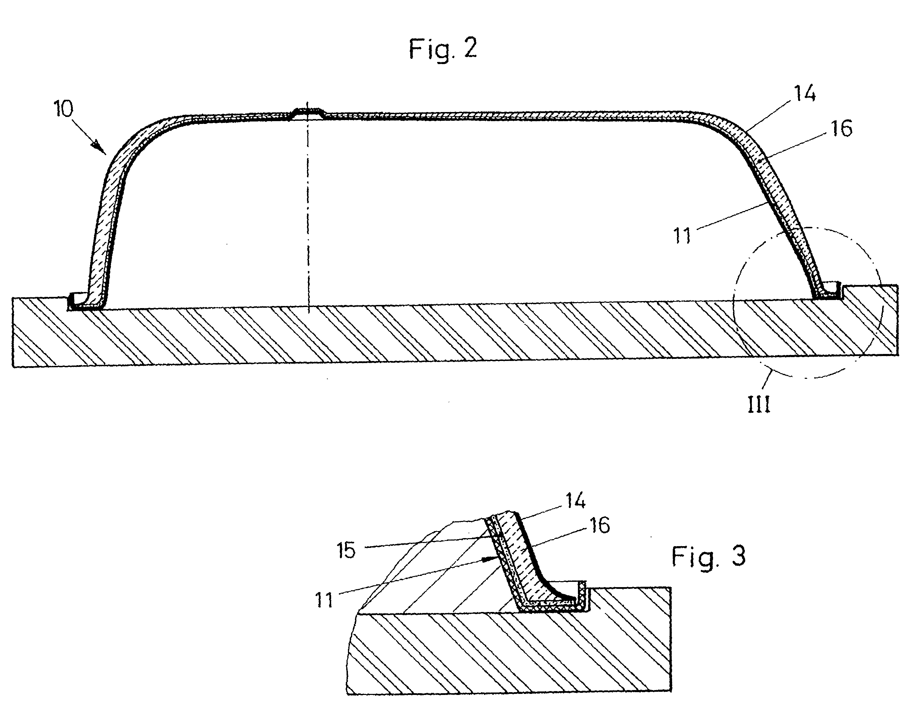

Es wird nun wiederum auf Fig. 1 Bezug genommen. Nachdem die Formaußenschale 13 entfernt wurde, wird dann die Stahlaußenschale (Stahlrohling 14) aufgelegt und über den mit den Coating aus dem Reaktionsharz 15 beschichteten Acrylrohling 11 gestülpt. Dieser in Fig. 1 oben dargestellte Stahlrohling 14 hat die Besonderheit, daß er eine vereinfachte quasi standardisierte Form aufweist und daher für verschiedene Acrylrohlinge 11 mit voneinander abweichendem Design verwendet werden kann. Dieser Stahlrohling 14 wird danach gegen den Acrylrohling 11 abgedichtet. Der Zwischenraum zwischen Acrylrohling 11 und Stahlrohling 14 ist dann natürlich in unterschiedlichen Bereichen unterschiedlich breit, da der Acrylrohling 11 ja ein von dem Stahlrohling abweichendes Design hat und somit keine Parallelität der beiden Rohlinge gegeben ist. In diesen Zwischenraum wird nun ein Polymerschaum 16 injiziert, der einen Verbund zwischen dem mit dem Reaktionsharz 15 versehenen Acrylrohling 11 und dem Stahlrohling 14 herstellt. Aus Fig. 2 kann man recht gut erkennen, daß dieser Zwischenraum, der mit dem Polymerschaum 16 vollständig ausgefüllt wird in verschiedenen Bereichen der Wanne unterschiedlich breit (stark) ist. Aus der vergrößerten Darstellung gemäß Fig. 3 kann man noch einmal etwas besser die verschiedenen Schichten erkennen, aus denen die erfindungsgemäße Verbundwanne 10 aufgebaut ist. Die unterste Schicht ist die Acrylschicht, die dem Acrylrohling 11 entspricht und die bei der fertigen Wanne im Gebrauch die Innenschicht beziehungsweise Nutzschicht der Verbundwanne 10 bildet. Danach schließt sich nach außen beziehungsweise in der Zeichnung nach oben hin an eine relativ dünne Schicht mit dem Coating aus dem Reaktionsharz. Die Stärke des Acrylrohlings kann beispielsweise in verschiedenen Bereichen unterschiedlich sein, bedingt durch das Tiefziehverfahren zu dessen Herstellung. Die Stärke des Acrylrohlings kann zum Beispiel zwischen etwa 1 mm und etwa 4 mm betragen. Die Stärke des darauf befindlichen Coatings aus dem Reaktionsharz kann beispielsweise etwa 2 mm bis 3 mm betragen.

Als äußere Schale ist in Fig. 3 der Stahlrohling 14 erkennbar und der Zwischenraum zwischen Stahlrohling 14 und Acrylrohling 11, der mit dem Polymerschaum 16 ausgefüllt ist. Dieser Zwischenraum kann wie gesagt unterchiedlich stark sein und entsprechend bei der Formung der Innenschicht aus der Acrylwanne genutzt werden und dieser Zwischenraum kann beispielsweise zwischen nur wenigen Millimetern und beispielsweise maximal etwa 50 mm betragen, wobei der Zwischenraum in den unterschiedlichen Bereichen der Wanne 10 variiert. In der vergrößerten Detailansicht gemäß Fig. 3 kann man in etwa die relativen Stärken der einzelnen Schichten der Verbundwanne erkennen.

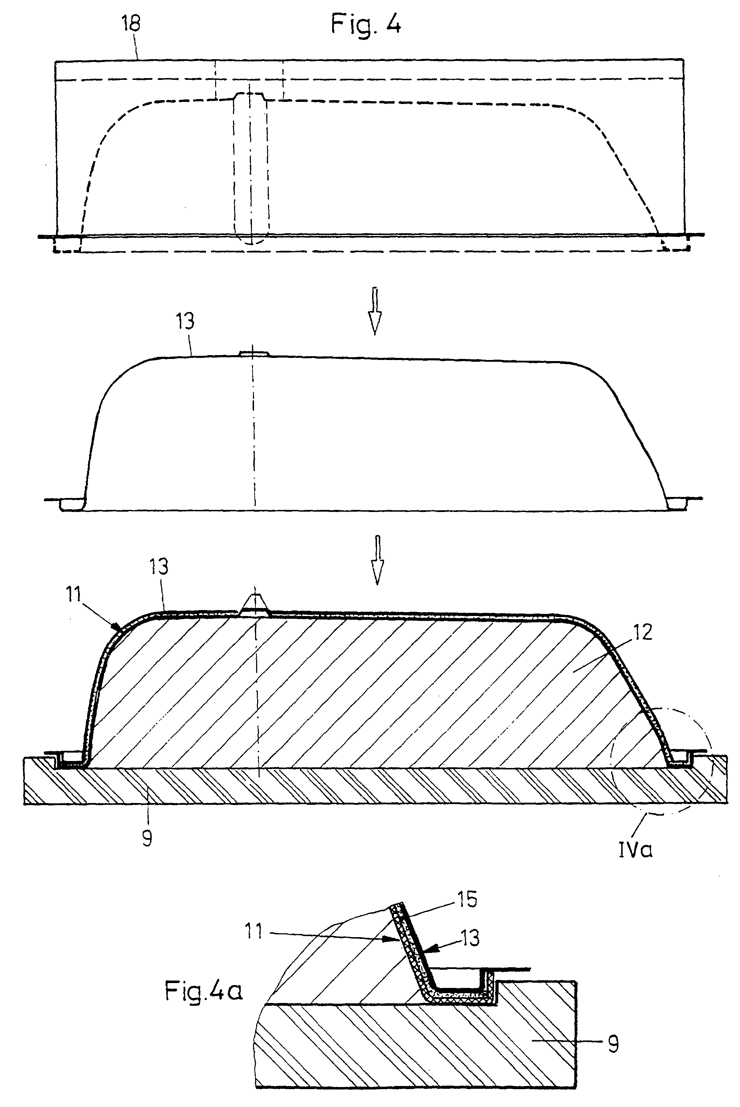

Nachfolgend wird eine weitere Variante eines erfindungsgemäßen Verfahrens beschrieben unter Bezugnahme auf die Fig. 4 bis 6. In Fig. 4 ist wiederum in dem unteren Bereich ein Acrylrohling 11 dargestellt, der auf einen Kern 12 aufgelegt wurde, wobei die spätere Innenseite der Wanne nach unten gerichtet ist. Der Kern 12 ruht wiederum auf der Grundplatte 9. Ähnlich wie bei dem zuvor beschriebenen Verfahren wird nun zunächst eine Formaußenschale 13 mit Abstand über dem Acrylrohling 11 plaziert. Diese Formaußenschale 13 ist in Fig 4 in der Mitte dargestellt. In den zwischenraum zwischen dieser Formaußenschale 13 und dem Acrylrohling 11 wird nach dem Abdichten ein geeignetes Reaktionsharz injiziert. Nach Aushärtung des Reaktionsharzes 15 wird die Formaußenschale 13 wieder abgenommen und man erhält eine Acrylwanne, die unterseitig mit einem Coating aus dem Reaktionsharz 15 beschichtet ist. Diese Zwischenstufe des erfindungsgemäßen Verfahrens ist in der Fig. 4a dargestellt.

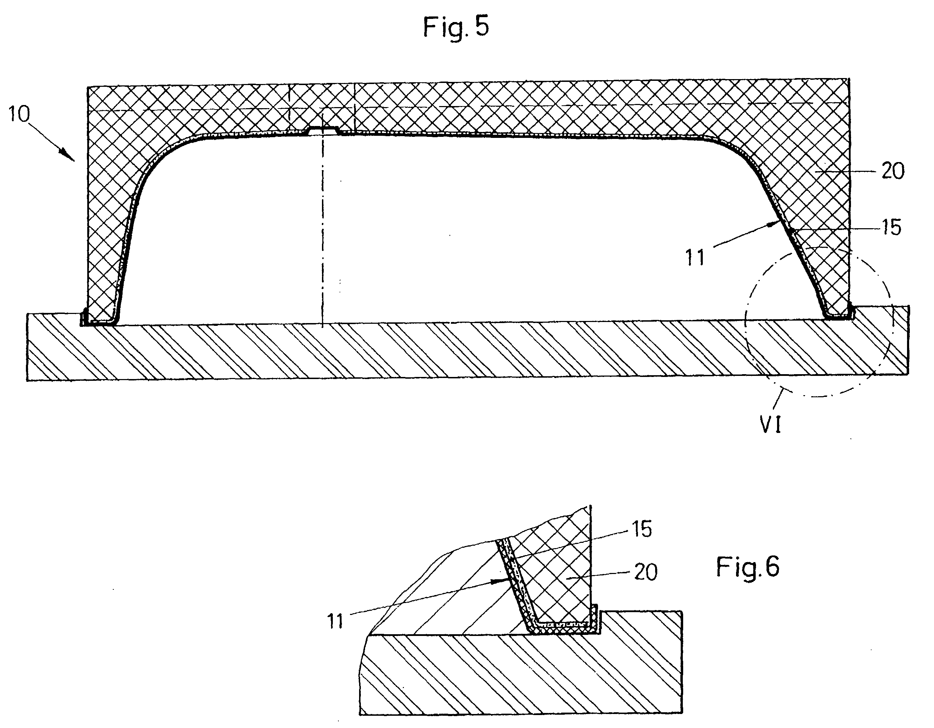

Nun wird eine neue Formaußenschale 18 aufgesetzt, die die Außenmasse eines zur fertigen Wanne 10 gehörenden Wannenträgers aufweist und die in der Fig. 4 oben dargestellt ist. Diese Formaußenschale 18 hat außen eine Quaderform. Der sich nun ergebende Zwischenraum zwischen dieser Formaußenschale 18 und der mit dem Coating beschichteten Acrylwanne 11 wird nun mit einem Polymerschaum, der zwischen die Wanne und die Formaußenschale 18 injiziert wird, ausgefüllt. Nach der Vernetzung dieses Polymerschaums erhält man eine fertige Wanne 10 mit einem integrierten Wannenträger 20. Diese fertige Wanne ist in Fig. 5 im Schnitt dargestellt. Einzelheiten ergeben sich aus der vergrößerten Detaildarstellung gemäß Fig. 6. Wie man sieht, weist diese fertige Wanne eine bei bestimmungsgemäßer Anordnung der Wanne innenliegende Acrylschicht aus dem Acrylrohling 11 auf und eine sich daran anschließende Coatingschicht aus dem Reaktionsharz 15 und einen damit verbundenen integrierten Wannenträger 20. Man erhält so eine fertige Verbundwanne 10, deren Einbau aufgrund des integrierten Wannenträgers 20 erleichtert ist.

## Patentansprüche

1. Verfahren zur Herstellung einer Verbundwanne, die wenigstens eine Stahlschale und wenigstens eine Acrylschale umfasst, die miteinander fest verbunden werden, wobei man in einem ersten Schritt einen tiefgezogenen Acrylrohling (11) über einen Kern (12) stülpt, **dadurch gekennzeichnet, dass** man
- im nächsten Schritt eine Formaußenschale (13) mit Abstand über dem Acrylrohling (11) plaziert;
- dann die Formaußenschale (13) und den Acrylrohling (11) gegeneinander abdichtet und in den Zwischenraum zwischen Formaußenschale (13) und Acrylrohling (11) ein geeignetes Reaktionsharz injiziert;
- und man nach Aushärtung des Reaktionsharzes (15) die Formaußenschale (13) entnimmt;
- dass man dann den Stahlrohling (14) auflegt und den Acrylrohling (11) und den Stahlrohling (14) gegeneinander abdichtet;
- und man danach in den Zwischenraum zwischen Acrylrohling (11) und Stahlrohling (14) einen Polymerschaum (16) injiziert und nach der Vernetzung die Verbundwanne (10) entformt.

2. Verfahren nach Anspruch 1, **dadurch gekennzeichnet, dass** man das Reaktionsharz (15) und/oder später den Polymerschaum (16) über eine Abfluss- oder Überlaufbohrung der Wanne in den jeweiligen Zwischenraum injiziert.

3. Verfahren nach Anspruch 1 oder 2, **dadurch gekennzeichnet, dass** man den Acrylrohling (11) nach dem Tiefziehen und bevor man ihn über den Kern (12) stülpt auf eine gewünschte Größe bzw. Form zuschneidet.

4. Verfahren nach einem der Ansprüche 1 bis 3, **dadurch gekennzeichnet, dass** man als Reaktionsharz (15) einen Kunststoff auf Basis von Methylmethacrylat oder Polyurethan oder Epoxid oder Polyester verwendet.

5. Verfahren nach einem der Ansprüche 1 bis 4, **dadurch gekennzeichnet, dass** man als Polymerschaum (16) ein Polyurethanschaumsystem verwendet.

6. Verfahren nach Anspruch 1, **dadurch gekennzeichnet, dass** man nach der Entformung der fertigen Wanne (10) Ab- und/oder Überlaufbohrungen anbringt.

7. Verfahren zur Herstellung einer Verbundwanne, die wenigstens einen Träger und wenigstens eine Acrylschale umfasst, die miteinander fest verbunden werden, wobei man in einem ersten Schritt einen tiefgezogenen Acrylrohling (11) über einen Kern (12) stülpt, **dadurch gekennzeichnet, dass** man im nächsten Schritt eine Formaußenschale (13) mit Abstand über dem Acrylrohling (11) plaziert, dann Formaußenschale (13) und Acrylrohling (11) gegeneinander abdichtet und in den Zwischenraum zwischen Formaußenschale (13) und Acrylrohling (11) ein geeignetes Reaktionsharz injiziert und man nach Aushärtung des Reaktionsharzes (15) die Formaußenschale (13) entnimmt und dass man nach der Abnahme der Formaußenschale (13) eine neue Formaußenschale (18) mit den Außenmaßen eines zur Wanne (10) gehörenden Wannenträgers aufsetzt.

8. , Verfahren nach Anspruch 7, **dadurch gekennzeichnet, dass** man zu der neuen aufgesetzten Formaußenschale (18) hin abdichtet.

9. Verfahren nach einem der Ansprüche 7 oder 8, **dadurch gekennzeichnet, dass** man einen Polymerschaum in den Zwischenraum zwischen Wanne und Formaußenschale (18) injiziert und nach dessen Vernetzung eine fertige Wanne (10) mit integriertem Wannenträger (20) entnimmt.

10. Verfahren nach einem der Ansprüche 7 bis 9, **dadurch gekennzeichnet, dass** man an der fertigen Wanne Ab- bzw. Überlaufbohrungen vornimmt.

11. Verfahren nach einem der Ansprüche 7 bis 10, **dadurch gekennzeichnet, dass** man als Polymerschaum einen solchen mit einem Raumgewicht von etwa 40 kg bis 60 kg, vorzugsweise von etwa 50 kg injiziert.

12. Verfahren nach einem der Ansprüche 7 bis 11, **dadurch gekennzeichnet, dass** man als Polymerschaum einen Polyurethanschaum verwendet.

## Claims

1. A method of producing a composite tub which comprises at least one steel shell and at least one acrylic shell which are fixedly attached to each other, wherein in a first step a thermoformed acrylic blank (11) is drawn over a core (12), **characterised in that**
- in the next step a mould outer shell (13) is placed at a distance over the acrylic blank (11);
- the mould outer shell (13) and the acrylic blank (11) are then sealed in relation to each other and a suitable reaction resin is injected into the gap between the mould outer shell (13) and the acrylic blank (11);
- after the reaction resin (15) has cured the mould outer shell (13) is removed;
- the steel blank (14) is then fitted and the acrylic blank (11) and the steel blank (14) are sealed in relation to each other;
- and thereafter a polymer foam (16) is injected into the gap between the acrylic blank (11) and the steel blank (14), and after cross-linking has occurred the composite tub (10) is demoulded.

2. A method according to claim 1, **characterised in that** the reaction resin (15) and/or subsequently the polymer foam (16) is injected into the respective gap via a drain hole or overflow hole in the tub.

3. A method according to claims 1 or 2, **characterised in that** the acrylic blank (11) is cut to a desired size or shape after thermoforming and before it is drawn over the core (12).

4. A method according to any one of claims 1 to 3, **characterised in that** a plastics material based on methyl methacrylate or polyurethane or epoxide or polyester is used as a reaction resin (15).

5. A method according to any one of claims 1 to 4, **characterised in that** a polyurethane foam system is used as a polymer foam (16).

6. A method according to claim 1, **characterised in that** drain holes and/or overflow holes are provided after the finished tub (10) has been demoulded.

7. A method of producing a composite tub which comprises at least one support and at least one acrylic shell which are fixedly attached to each other, wherein in a first step a thermoformed acrylic blank (11) is drawn over a core (12), **characterised in that** in the next step a mould outer shell (13) is placed over the acrylic blank (11) at a distance, the mould outer shell (13) and the acrylic blank (11) are then sealed in relation to each other and a suitable reaction resin is injected into the gap between the mould outer shell (13) and the acrylic blank (11), the mould outer shell (13) is removed after the reaction resin (15) has cured, and after removing the mould outer shell (13) a new mould outer shell (18) is fitted which has the external dimensions of a tub support which forms part of the tub (10).

8. A method according to claim 7, **characterised in that** a seal is provided towards the newly fitted mould outer shell (18).

9. A method according to either one of claims 7 or 8, **characterised in that** a polymer foam is injected into the gap between the tub and the mould outer shell (18), and after the foam has cross-linked a finished tub (10) comprising an integrated tub support (20) is removed.

10. A method according to any one of claims 7 to 9, **characterised in that** drain holes or overflow holes are produced in the finished tub.

11. A method according to any one of claims 7 to 10, **characterised in that** a polymer foam is injected which has a weight per unit volume of about 40 kg to 60 kg, preferably of about 50 kg.

12. A method according to any one of claims 7 to 11, **characterised in that** a polyurethane foam is used as a polymer foam.

## Revendications

1. Procédé de fabrication d'une baignoire composite, qui comprend au moins une coque en acier et au moins une coque acrylique qui sont reliées fixement entre elles, dans lequel, au cours d'une première étape, on recouvre un noyau (12) d'une ébauche acrylique (11) obtenue par emboutissage profond, **caractérisé en ce que** :
- au cours de l'étape suivante, on place une coque extérieure de moulage (13) à distance au-dessus de l'ébauche acrylique (11),
- on rend ensuite étanches la coque extérieure de moulage (13) et l'ébauche acrylique (11) l'une par rapport à l'autre et on injecte une résine de réaction appropriée dans l'interstice entre la coque extérieure de moulage (13) et l'ébauche acrylique (11) ;
- et après durcissement de la résine de réaction (15), on enlève la coque extérieure de moulage (13) ;
- on place ensuite l'ébauche d'acier (14) et on rend étanches l'ébauche acrylique (11) et l'ébauche d'acier (14) l'une par rapport à l'autre ;
- et on injecte ensuite, dans l'interstice entre l'ébauche acrylique (11) et l'ébauche d'acier (14), une mousse polymère (16) et, après réticulation, on démoule la baignoire composite (10).

2. Procédé selon la revendication 1, **caractérisé en ce qu'**on injecte la résine de réaction (15) et/ou ultérieurement la mousse polymère (16) dans l'interstice respectif, à travers un trou d'écoulement ou de trop-plein de la baignoire.

3. Procédé selon la revendication 1 ou 2, **caractérisé en ce que** l'on découpe l'ébauche acrylique (11) aux dimensions ou à la forme voulues, après l'emboutissage profond et avant de recouvrir le noyau (12) avec cette ébauche.

4. Procédé selon l'une des revendications 1 à 3, **caractérisé en ce qu'**on utilise comme résine de réaction (15) une matière plastique à base de méthacrylate de méthyle ou de polyuréthanne ou d'époxy ou de polyester.

5. Procédé selon l'une des revendications 1 à 4, **caractérisé en ce qu'**on utilise comme mousse polymère (16) un système de mousse de polyuréthanne.

6. Procédé selon la revendication 1, **caractérisé en ce qu'**après démoulage de la baignoire (10) finie, on pratique des trous d'évacuation et/ou de trop-plein.

7. Procédé de fabrication d'une baignoire composite qui comprend au moins un support et au moins une coque acrylique qui sont reliées fixement entre elles, dans lequel, au cours d'une première étape, on recouvre un noyau (12) d'une ébauche acrylique (11) obtenue par emboutissage profond, **caractérisé en ce qu'**au cours de l'étape suivante, on place une coque extérieure de moulage (13) à distance au-dessus de l'ébauche acrylique (11), on rend ensuite étanches la coque extérieure de moulage (13) et l'ébauche acrylique (11) l'une par rapport à l'autre et on injecte une résine de réaction appropriée dans l'interstice entre la coque extérieure de moulage (13) et l'ébauche acrylique (11), et après durcissement de la résine de réaction (15), on enlève la coque extérieure de moulage (13) et **en ce qu'**après enlèvement de la coque extérieure de moulage (13), on place une nouvelle coque extérieure de moulage (18) avec les dimensions extérieures d'un support de baignoire qui fait partie de la baignoire (10).

8. Procédé selon la revendication 7, **caractérisé en ce qu'**on assure l'étanchéité par rapport à la nouvelle coque extérieure de moulage (18) mise en place.

9. Procédé selon l'une des revendications 7 ou 8, **caractérisé en ce qu'**on injecte une mousse polymère dans l'interstice entre la baignoire et la coque extérieure du moulage (18) et, **en ce qu'**après sa réticulation, on enlève une baignoire (10) finie avec support de baignoire (20) intégré.

10. Procédé selon l'une des revendications 7 à 9, **caractérisé en ce qu'**on pratique des trous d'évacuation ou de trop-plein sur la baignoire finie.

11. Procédé selon l'une des revendications 7 à 10, **caractérisé en ce qu'**on injecte, comme mousse polymère, une mousse polymère d'un poids par unité de volume d'environ 40 kg à 60 kg, de préférence d'environ 50 kg.

12. Procédé selon l'une des revendications 7 à 11, **caractérisé en ce qu'**on utilise comme mousse polymère une mousse de polyuréthanne.
